# EUROPEAN PATENT SPECIFICATION

(11) **EP 3 615 474 B1**
(45) Date of publication and mention of the grant of the patent: **17.03.2021**
(21) Application number: 17721596.9
(22) Date of filing: 28.04.2017
(51) Int. Cl.: C02F 1/04, C02F 11/06, B01D 1/30, B01D 1/26, B01D 3/14, A47K 11/00, C02F 1/02, C02F 1/16, C02F 1/32, C02F 3/34, C02F 11/12

(54) **METHOD AND APPARATUS FOR ISOLATION OF POTENTIALLY HARMFUL MATERIAL**
VERFAHREN UND VORRICHTUNG ZUR ISOLIERUNG VON POTENZIELL SCHÄDLICHEM MATERIAL
PROCÉDÉ ET APPAREIL POUR L'ISOLEMENT D'UN MATÉRIAU POTENTIELLEMENT DANGEREUX

(43) Date of publication of application: 04.03.2020
(73) Proprietor: PharmaLundensis AB, 223 63 Lund (SE)
(72) Inventor: SKOGVALL, Staffan, 224 72 Lund (SE)
(74) Representative: AWA Sweden AB
(86) International application number: PCT/EP2017/060159
(87) International publication number: WO 2018/196990

(56) References cited:
- EP-A1- 0 637 568
- EP-A2- 2 052 940
- WO-A1-2005/073136
- WO-A1-2017/076745
- US-B1- 7 001 512

## Description

### TECHNICAL FIELD

The inventive concept relates to a method and an apparatus for isolation of potentially harmful material, especially medical substances such as antibiotics and cytostatics, present in dissolved state in human or animal bodily waste (urine and/or feces).

### BACKGROUND

Medical substances such as antibiotics, cytostatics and non-steroid, anti-inflammatory drugs are widely used to treat sick persons and are sometimes also used to treat animals. Furthermore, it is commonplace in many countries to administer antibiotics to healthy animals in order to promote growth. Any administered substances are absorbed into the body of the individual. Here, they circulate for some time and are subsequently excreted in original or metabolized form via the urine and/or feces. Eventually, the medical substances enter the sewage system. Since general waste fluid treatment plants are not designed to remove such medical substances from the incoming waste fluid, considerable amounts of medical substances end up in the environment.

In an article entitled "Selective Pressure of Antibiotic Pollution on Bacteria of Importance to Public Health", authored by A.Tello, B. Austin and T. Telfer and published in 2012 on pages 1100-1106 of Environmental Health Perspectives (Volume 120), it has been shown that even very low concentrations of antibiotics in the environment can lead to an increased prevalence of antibiotic resistant bacteria. Furthermore, it is also quite possible that development of antibiotic resistance occurs already in the waste water system. In particular, the pipes of the waste water system contain enormous numbers of bacteria. When exposed to antibiotics for a long time, they can become increasingly resistant to antibiotics.

Many patients in hospitals are severely ill and are therefore often treated with broad-spectrum antibiotics. It would be extremely unfortunate if bacteria developed resistance to these especially valuable antibiotics so that they became useless. Thus, the danger with bacterial resistance is especially valid at hospitals where a relatively large amount of broad-spectrum antibiotics is used.

In the related context, in a European Union Fact sheet (http://ec.europa.eu/research/fp7/pdf/antimicrobial_resistance_fact_sheet.pdf) it is disclosed that more than 25 000 people in the EU die each year from infections caused by drug resistant bacteria, including multi-resistant bacteria, and that antibiotic-resistant germs are regularly found in many hospitals throughout the EU, infecting 4 million patients every year.

An article entitled "Multidrug-resistant Pseudomonas aeruginosa outbreaks in two hospitals: association with contaminated hospital waste-water systems" (Breathnach AS, Cubbon MD, Karunaharan RN, Pope CF, Planche TD. J Hosp Infect. 2012 Sep;82(1):19-24. doi: 10.1016/j.jhin.2012.06.007) describes infection of hospital patients caused by multidrug-resistant bacteria present in hospital sewage systems.

An article entitled "Spread from the Sink to the Patient: in situ Study Using Green Fluorescent Protein (GFP) Expressing- Escherichia coli to Model Bacterial Dispersion from Hand Washing Sink Trap Reservoirs." (Appl Environ Microbiol. 2017 Feb 24. pii: AEM.03327-16. doi: 10.1128/AEM.03327-16. Kotay S, Chai W, Guilford W, Barry K, Mathers AJ) describes how bacteria present in the water-lock of hospital toilets may create a bio film which within seven days may emerge into the sink and infect patients. If such bacteria are resistant to antibiotics, they may cause life-threatening infections.

WO2014/011111 proposes to employ activated carbon in order to solve the problem of release of potentially harmful substances into the wastewater system.

US 2012/0055777 A1 discloses a system for processing urine into recycled flushing fluid using a vacuum destillator.

EP 0 637 568 A1 discloses a system and a method for treating human waste, the system being installed in a vehicle or a vessel and utilizing its internal combustion engine for a drying treatment of human waste.

### SUMMARY OF INVENTION

In the light of the above, it is an object of the present inventive concept to reduce the problems related to the release of medical substances into sewage systems and/or the environment. Especially, the present inventive concept aims at reducing at least the problem relating to broad-spectrum antibiotics and multi-resistant bacteria developing therefrom.

According to a first aspect of the inventive concept, there is provided a method for i handling bodily waste including medical substances, such as antibiotics, present in dissolved state in bodily waste, said method defined in claim 1 and comprising among other features:
in at least one buffer tank, receiving an aqueous composition containing potentially harmful medical substances present in dissolved state in bodily waste;
temporarily storing the aqueous composition in the buffer tank; transferring the aqueous composition in batches from the buffer tank to a vaporization unit comprising one or more vaporization chambers;
in said one or more vaporization chambers, vaporizing water from the aqueous composition for producing a water-reduced waste material containing said potentially harmful medical substances;
passing the vaporized water through one or more protective structures, such as one or more demisters, arranged to prevent aerosols or droplets to pass through;
transferring the waste material from the vaporization unit to a plurality of waste containers;
vaporizing additional water from the waste material in said containers by heating and/or pressure reduction, for producing a further water-reduced waste material;
removing and replacing said one or more waste containers containing said waste material; and
subjecting removed waste containers together with the waste material to a destructive treatment, such as a high-temperature incineration process.

According to a second aspect of the inventive concept, there is provided an apparatus for handling bodily waste including medical substances, such as antibiotics, present in dissolved state in bodily waste, said apparatus defined in claim 9 and comprising:
at least one buffer tank which is arranged to receive and temporarily store the aqueous composition containing medical substances present in dissolved state in bodily waste;
a vaporization unit which is arranged to receive the aqueous composition in batches from the buffer tank, said vaporization unit comprising one or more vaporization chambers arranged to vaporize water from the aqueous composition for producing a water-reduced waste material;
one or more protective structures, such as one or more demisters, which are arranged to prevent aerosols or droplets in the vaporized water to pass through; and
a plurality of replaceable waste containers which are arranged to receive the water-reduced waste material from the vaporization unit;
means for vaporizing, by heat and/or pressure reduction, additional water from the waste material in said waste containers for producing a further water-reduced waste material.

Preferred embodiments of the inventive concept are set out in the dependent claims.

The inventive concept presents at least the following advantages:
A general aspect of the invention is to isolate unwanted substances that are dissolved in bodily waste (urine and/or feces) by removal of substantial amounts of water from the bodily waste. The removed water may be released to a public sewage system or into the environment, whereas the remaining waste material, which especially contains the unwanted potentially harmful substances, may subsequently be incinerated in a high temperature oven or the like. Thus, the waste material including the potentially harmful substances may be handled in a secure way and typically the waste material may be destructed by burning.

Using the inventive method and apparatus for instance in hospitals, for handling large amounts of blackwater which may include potentially harmful medical substances present in dissolved state in bodily waste, makes it possible to effectively isolate such substances from the major part of the water content of the blackwater and, thereby, makes it possible to avoid that such potentially harmful medical substances enters into the public sewage system and eventually enters into the environment.

As mentioned above, it is commonplace in many countries to administer pharmaceuticals, such as antibiotics, to animals in order to promote growth. It is undesired that such medical substances present in animal bodily waste end up in the environment. Using the inventive method and apparatus for handling animal bodily waste may substantially reduce this risk.

The use of one or more buffer tanks makes it possible to avoid a frequent feeding of the aqueous composition into an ongoing vaporization process in vaporization chambers. Every feeding of new aqueous composition into the vaporization unit may result in a reduced temperature in the vaporization chamber, resulting in a temporary halt of the vaporization process. When the inventive concept is implemented in a toilet system, a further advantage of using one or more buffer tanks is that stationary blackwater in the piping may be avoided, reducing the risk of leakage and bacteria growth.

According to the inventive concept, one or more protective structures, such as one or more demisters, are arranged to prevent aerosols/droplets to pass through and, thereby, to prevent undesired substances, in particular medical ones, from passing through. The one or more protective structures considerably enhance the effectiveness of the isolation process. One or more protective structures may especially be arranged at the vaporization chambers of the vaporization unit. The technical effect achieved by introducing at least one protective structure at the vaporization unit is to prevent small, mist-building droplets (aerosol) that may be created in the vaporization process and dragged along with the generated vapor from leaving the vaporization chambers. The droplets/aerosol may comprise medical substances, such as antibiotics, cytostatics and non-steroid, anti-inflammatory drugs intended to be isolated in the vaporization chambers. In embodiments where a bacteria reduction and/or a fragmentation are performed in one or more containers, such containers may also be provided with such protective structures for the same purpose. In embodiments where the waste material is subjected to an additional water reduction, additional protective structures may be arranged in such a process for the same purpose. In embodiments where the blackwater from toilets is treated in bacteria reduction containers, these containers may also have a protective structure on the top suction outlet.

### Terminology

The expression "bodily waste" as used herein is to be interpreted as bodily waste consisting of human or animal urine and/or feces.

The term "blackwater" as used herein may consist of a mixture comprising human bodily waste, rinsing/flushing water applied at toilets or urinals and optional cleansing materials (toilet paper and possible cleaning/antiseptic chemicals). In animal applications, the term "blackwater" may consist of a mixture comprising animal bodily waste, optionally rinsing water and optionally cleaning chemicals.

The following expressions are used for the material as it is processed and transported according to the inventive concept:
The term "aqueous composition" is used as a generic term covering a number of possible options: According to a first option, the aqueous composition may consist of urine only. According to a second option, the aqueous composition may consist of bodily waste (urine and/or feces) only. According to a third option, the aqueous composition may comprise blackwater from one or more toilets and/or one or more urinals, or from animals. According to a fourth option, the aqueous composition may comprise a fragmentized blackwater slurry obtained by fragmentizing blackwater from one or more toilets and/or one or more urinals or from animals.

When the inventive concept is used in a toilet system comprising one or more toilets, the aqueous composition initially ejected from the toilets is termed "ejected blackwater". After an optional fragmentation, the blackwater is termed "blackwater slurry". The water-reduced material which is obtained from the vaporization unit, and which is optionally transferred to one or more waste containers, is termed "water-reduced waste material". If an optional additional water-reduction is performed in waste containers, the final material contained in the waste containers is referred to as "further water-reduced waste material" or "final waste material".

The expression "potentially harmful medical substances" as used herein is not to interpreted as the medical substances need to be harmful per se. Rather, the expression relates also to medical substances, such as broad-spectrum antibiotics, which are indirectly potentially harmful to the environment and/or humans, especially by inducing antibiotic-resistance bacteria.

The expression "isolating potentially harmful medical substances" as used herein is not to be interpreted in a strict sense meaning isolating only such substances from all other materials. Rather, the expression is to be interpreted in broad sense as the action of forming or producing a relatively reduced amount of waste material containing at least in part such potentially harmful medical substances, said reduced amount of waste material being isolated from the major part of the aqueous composition, especially evaporated water, making it possible to considerably reduce the amount of substance containing the potentially harmful medical substances.

The term "buffer tank" as used herein is to be interpreted as a container or tank which is arranged to receive the aqueous composition and to temporarily store the received aqueous composition. This makes it possible to store the aqueous composition in the buffer tank(s) for a certain time before the aqueous composition is thereafter transferred from the buffer tank(s) to the vaporization unit. Thereby, the aqueous composition does not have to be continuously transferred to the vaporization unit but may rather be transferred in batches. However, it may also be possible to have some continuous flow from the buffer tank(s) to the central vaporization unit.

In some embodiments, there may be one single buffer tank, for instance a central buffer tank receiving blackwater or blackwater slurry from a plurality of toilets and/or urinals. There may also be more than one buffer tank, for instance in larger systems. In such embodiments each buffer tank may be arranged to receive blackwater or blackwater slurry from a sub-set of the plurality of toilets and/or urinals. As an alternative, a plurality of buffer tanks may be operated in sequence such that the aqueous composition is first transferred to a first buffer tank and, thereafter, transferred to a subsequent second buffer tank. It is also possible to use local buffer tanks upstream one or more central buffer tanks.

The buffer tank(s) may be isolated and heated in order to avoid bacteria growth therein. Alternative means to reduce bacteria growth may comprise for example UV treatment or chemical treatment. These alternatives may be combined with heating.

The term "vaporization" as used here is to be interpreted as a phase transition from the liquid phase to gas phase either through boiling or through evaporation.

The term "bacteria reduction" as used herein is to be interpreted as a treatment destructive to bacteria, i.e. a treatment for killing or at least inactivating bacteria thereby reducing the number of viable bacteria in the aqueous composition and the waste material. The term should be interpreted as encompassing different degrees of bacteria destruction depending on e.g. waste volumes, applied bacteria reduction techniques, heating temperatures and heating time. In preferred embodiments, a total elimination of bacteria is preferred. Furthermore, the term "bacteria reduction" also, in a broader sense, relates to a reduction of all pathogens, including virus and fungi, as well as antibiotic resistance genes in DNA of phage particles.

The term "fragmentation" as used herein is to be interpreted as a mechanical treatment or process by which water, bodily waste and optionally cleansing material (toilet paper as well as possible cleaning/antiseptic chemicals) are turned into a suspension consisting of a preferably heterogeneous mixture in which the particles do not dissolve but normally get suspended throughout the bulk of the medium. Especially, toilet papers may be cut or torn or in any other way reduced in size into smaller pieces.

The term "protective structure" as used herein is to be interpreted as a device arranged to block liquid (such as aerosol drops) but to allow vapor to pass through by creating a physical obstacle that hinders liquid (such as aerosol drops) but allows vapor to pass through. Thus, a protective structure is vapor permeable but prevents passage of mist-building droplets (aerosols). An example of a protective structure may include a plurality of porous, deformable filling bodies. By way of example, such bodies may be made of steel wool or polymer sponge or a corresponding porous material that hinders liquid but is permeable to gas. In other embodiments, a protective structure may comprise a metal net, such as a demister.

In this context and as is known to the person skilled in the particular technical field, these bodies could be embodied and arranged in many different ways. Hence, typical filling bodies may also include shapes such as saddles or rings, which may comprise packing, e.g. structured or knitted packing. Simple baffles are also envisaged. The term "demister" as used herein is to be interpreted as a unit made of thin steel threads or the like which operates as a grid/net/lattice for effectively preventing aerosol/droplets to pass through and enabling only for vapor to pass through the demister.

The terms "vacuum toilet" and "vacuum toilet system" as used herein are to be interpreted in a broad sense as referring to a system using an air pressure difference as a means for the removal/flushing of bodily waste and cleansing material from the toilets of the system, resulting in a minimal requirement of water. In preferred embodiments, "vacuum" may have its ordinary meaning in the technical field as meaning "suction". However, it may also be possible in alternative embodiments to use an air pressure difference in the form of a positive air pressure rather than suction, at least at some stages, for accomplishing the transport. A vacuum toilet system may be a constant vacuum system (CVS) or a vacuum on demand (VOD) system, or a combination thereof.

The terms "pipes" and "piping" as used herein are to be interpreted in a broad sense and may especially include not only conventional pipes but also flexible tubes/hoses, which in some embodiments may be the preferred option for installation.

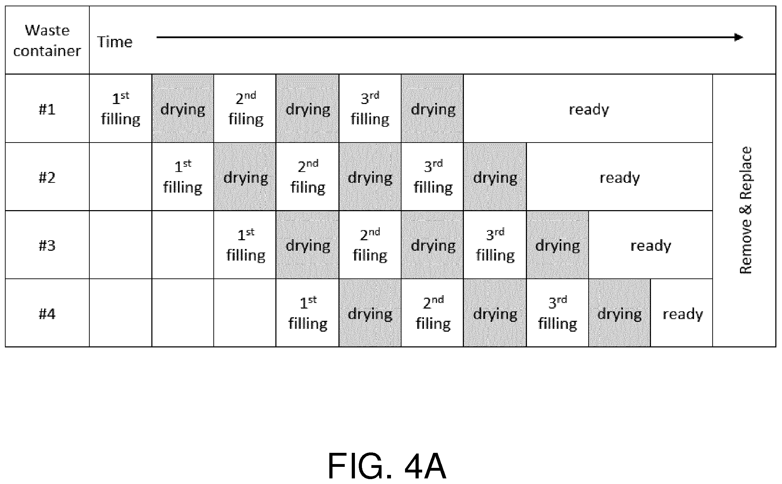

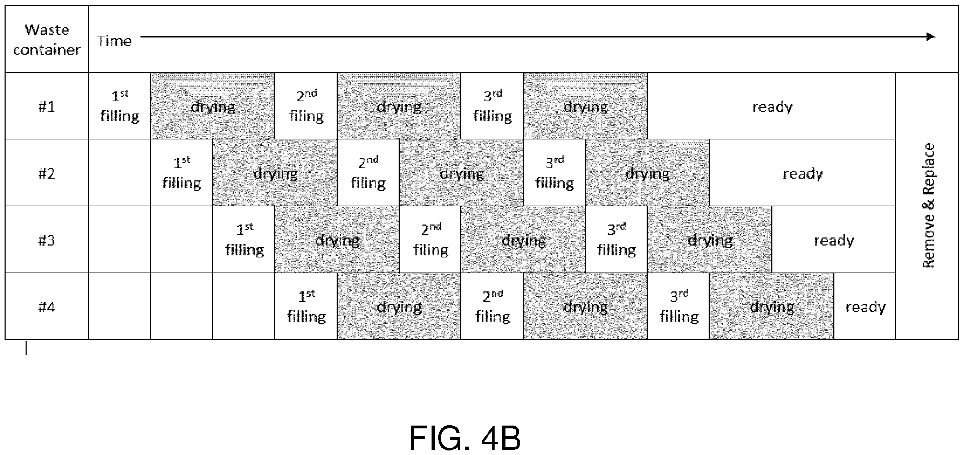

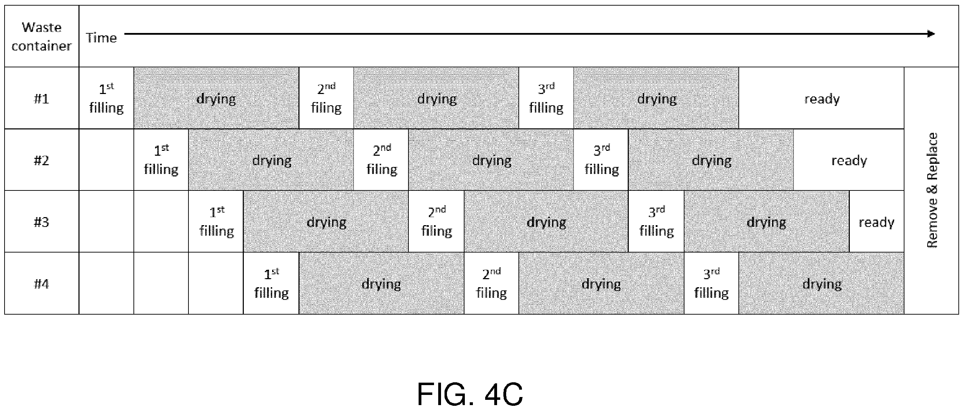

The terms "single-use waste container" and "replaceable waste container" and "waste isolation container" as used herein are to interpreted as a waste container which is replaced by another waste container when full. However, it may take repeated filling/drying cycles before the container is filled to the desired level, as described below and in Fig 4.

### Embodiments of the inventive concept

In the vaporization unit, the water content of the aqueous composition is reduced by 30% to 95%, preferably 50% to 95%, and most preferably 70% to 95%, Thereby, the water-reduced waste material produced in the vaporization unit may contain a remaining water content of 70% to 5%, preferably 50% to 5%, and most preferably 30% to 5%, of the initial water content. This remaining water content of the waste material will be sufficient to avoid major deposits in said one or more vaporization chambers of the vaporization unit. No or only minor deposits will occur. This has the advantage that the vaporization chambers may be reused.

In some embodiments, the protective structures may be heated for preventing vapor from condensing at the protective structures. The heating may be achieved by arranging a heating element on the protective structure or the demister to heat it by being thermally connected therewith. The heating could also be achieved by arranging a heating element or heater externally of the protective structure. The heating is possible to achieve by electrical means and/or heat exchanging. Another possibility is to simply use the heat from the vapor itself, possibly together with isolation of the protective structure

According to the invention, the waste material is transferred from the vaporization unit to one or more waste containers, which may be removed and replaced. Removed waste containers with the waste material therein may be subjected to a destructive treatment, such as a high-temperature incineration process.

According to the invention, the water content of the waste material obtained from the vaporization unit is further reduced, especially when the waste material is present in waste containers connected to the vaporization unit.

Such a further water reduction of the waste material may be performed in waste containers before removing the waste containers from the system. It is also possible to perform the further water reduction after removing the waste containers from the system, optionally at a different location and optionally in different containers. Also, a combination thereof may be possible, e.g. performing the further water reduction partly before and partly after removing the waste containers.

The water reduction is performed by vaporization, which may be performed by heating and/or by pressure reduction. Such further water reduction is such that the water content of the waste material is further reduced by 10% to 100%, preferably 30% to 100%, and most preferably by 50% to 100%. Thus, in some embodiments a combined water-reduction may be such that the final water content of the final waste material is 10% to 0% of the water content of the aqueous composition, preferably 5% to 0%, and most preferred 0%, i.e. a completely dry final waste material. Such final water reduction may result in a very substantial reduction of the amount of produced waste material. Even if such final vaporization results in an almost dry or completely dry final waste material in the waste containers, this solution has the advantage that it will cause no problems with deposits in the waste containers since the waste containers can be single-use containers which can be removed and destroyed together with the waste material.

The waste material is transferred from the vaporization unit into a plurality of waste containers in sequence such that while one or more waste containers are being filled water is being vaporized from waste material present in one or more previously filled waste containers.

In some embodiments, the inventive apparatus may be connected to a waste water system, such as a public sewage system, for releasing water vapor and/or condensed water vapor obtained from evaporation of the aqueous composition, and optionally from the evaporation of waste material, into said waste water system. In other embodiments, the water vapor and/or condensed water vapor may be released into a tank, or directly into the environment, for instance in applications involving processing animal bodily waste.

Described but not claimed is that the aqueous composition is subjected to a bacteria reduction. The bacteria reduction may be performed upstream of the buffer tank.

In embodiment where the aqueous composition comprises blackwater from toilets and/or urinals, the blackwater may be ejected into associated bacteria reduction tanks or containers in which the bacteria reduction is performed. There may be provided one bacteria reduction container for each vacuum toilet in order to reduce or minimize the distance from the toilet to the bacteria reduction container. Each bacteria reduction container is located adjacent to or is integrated with the associated vacuum toilet such that the blackwater is ejected essentially directly into the bacteria reduction container from the toilet. It is preferred that the bacteria destruction occurs as high upstream as possible in the system, i.e. immediately after the bodily waste leaves the toilet. This will ensure that the system is kept with a minimum of living bacteria.

A substantial advantage of subjecting the ejected blackwater to an initial bacteria reduction treatment is that this eliminates or at least substantially reduces the risk of bacteria being in constant contact with antibiotics in the piping of the system. Such constant contact may otherwise generate antibiotic resistant bacteria which could spread backwards, e.g. into hospital departments and infect patients.

A further advantage of subjecting the ejected blackwater to an initial bacteria reduction treatment is that it eliminates or reduces the risk of the staff handling the system during normal operation or service being infected by pathogens in the piping of the system.

The bacteria reduction may be performed entirely or at least partly by heating. When using bacteria reduction containers, such containers may be isolated containers that may be pre-heated or heated in response to a flushing. Alternative means for bacteria reduction may comprise for example UV-treatment or chemical treatment. These alternatives may be combined with heating.

In some embodiments, the aqueous composition comprises a fragmentized slurry obtained by fragmentizing. In some embodiments, blackwater ejected from toilets is subjected to a fragmentation by which the blackwater is turned into a blackwater slurry. The fragmentation, which may cut toilet paper into smaller pieces, preferably occurs high upstream in the system close to the toilets, such that small-diameter piping may be used for transferring the blackwater slurry. Bacteria reduction and fragmentation may be performed essentially at the same time, especially in one or more heated bacteria reduction containers as described above. However, it is also possible to perform the fragmentation at least partly before or at least partly after the bacteria reduction. There may be one fragmentation unit for each toilet. The fragmentation may also occur at least partly in pumps used for transporting the blackwater.

In a toilet system, an initial fragmentation allows the fragmentized blackwater to be fed as a slurry or as a more water-like fluid through pipes having a substantially smaller diameter compared to larger-diameter sewer piping required for transporting unfragmentized blackwater in conventional water-flushed or vacuum toilet systems. Inner pipe diameters in the order of 1 to 2 cm may be possible to use for the blackwater slurry, compared to pipe diameters in the order of 4 to 5 cm or larger as used in conventional vacuum or water-flushed toilet systems.

In some embodiments, the aqueous composition comprises blackwater from one or more vacuum toilets. A vacuum toilet system may be a constant vacuum system (CVS). This may have the advantage of avoiding stationary blackwater in the piping. In other embodiments, the vacuum toilet system may be a vacuum on demand (VOD) system. Such systems may also be combined. An advantage of using vacuum toilets instead of conventional water-flushed toilets is that vacuum toilets require only a very limited amount of cleansing water for each flushing, compared to the amount of flushing water in a conventional water-flushed toilet, which uses water instead of vacuum for transport. Using vacuum toilets substantially limits the water content of the aqueous composition to be treated and, thereby, the time and energy consumption needed for water removal by vaporization.

In some embodiments, one or more pumps may be used to reduce the pressure during vaporization, such that a below atmospheric pressure is achieved. This gives a better control of the vaporization process in relation to the boiling point. This also reduces bad smell emanating during the process.

In some embodiments, the aqueous composition comprises a fragmentized blackwater slurry which is subjected to an additional fragmentation. Such an additional fragmentation may be arranged upstream of the vaporization unit. The additional fragmentation may especially be arranged close to the vaporization unit. By arranging such an additional fragmentation of the blackwater slurry before it enters the vaporization unit, is may be possible to prevent or at least substantially reduce deposits of cellulose fragments (small pieces of toilet paper) on the inner walls of the vaporization chamber(s). A further advantage of arranging such a two-stage fragmentation in a toilet system is that an initial first local fragmentation at the toilets may be performed by less costly fragmentation units for each toilet or for each group of toilets for performing an initial fragmentation which is sufficient in terms of fragmentation degree for allowing the blackwater slurry to be transferred through small-diameter piping, whereas a second central fragmentation may be performed by a more advanced and costly equipment in a centralized manner, for achieving a finer fragmentation in order to prevent unwanted cellulose deposits in the vaporization unit.

In some described (not claimed) embodiments, the method and the system may further comprise means for subjecting the aqueous composition to a chemical treatment for breaking down cellulose. Such means may be arranged upstream of the vaporization unit, either upstream or downstream of the buffer tank(s). In such embodiments, a blackwater slurry may be subjected to the cellulose breakdown treatment during a suitable time period before being transferred further into the vaporization unit. Thereby, one may prevent or at least substantially reduce deposits of cellulose fragments (small pieces of toilet paper) on the inner walls of the vaporization chamber(s). Such a chemical treatment may advantageously be combined with the above-mentioned centralized additional fragmentation, which may then preferably be located upstream of the chemical treatment. As an example, the chemical treatment may include the use of cellulases or strong acids such as hydrochloric acid.

In some described (not claimed) embodiments, the method and the system may further comprise means for removing solids from the aqueous composition, for instance a decanter centrifuge arranged at the input of the vaporization unit. Such solid-matter removal means may be arranged upstream of the vaporization unit, either upstream or downstream of the buffer tank. The removed solids, such as cellulose fragments (small toilet paper pieces), may be transferred to a waste handling unit in order to be handled together with the waste material received from the vaporization unit and may undergo further water reduction treatment.

The above and other features of the inventive concept, and preferred embodiments and advantages thereof, are set out in the claims and will be described further in detail below.

### BRIEF DESCRIPTION OF THE DRAWINGS

The inventive concept, some non-limiting embodiments and further advantages of the inventive concept will now be further described with reference to the drawings.
Fig. 1 schematically illustrates a vacuum toilet system in which an embodiment of the method and the apparatus according to the inventive concept is implemented.
Fig 2A and Fig. 2B schematically illustrate two alternatives of a first process stage of the system in Fig. 1.
Fig. 3 schematically illustrates an embodiment of a third process stage and a fourth process stage of the system in Fig. 1.
Fig. 4A to Fig. 4C illustrate alternative examples of waste handling in a fourth process stage of the system in Fig. 1.
Fig. 5 schematically illustrates optional further process units.
Fig. 6 is a flow chart describing an embodiment of a method according to the inventive concept.
Fig. 7 schematically illustrates an alternative waste handling.
Fig. 8 schematically illustrates a further alternative embodiment.
Fig. 9 schematically illustrates an embodiment for handling animal bodily waste.

### DETAILED DESCRIPTION OF PREFERRED EMBODIMENTS

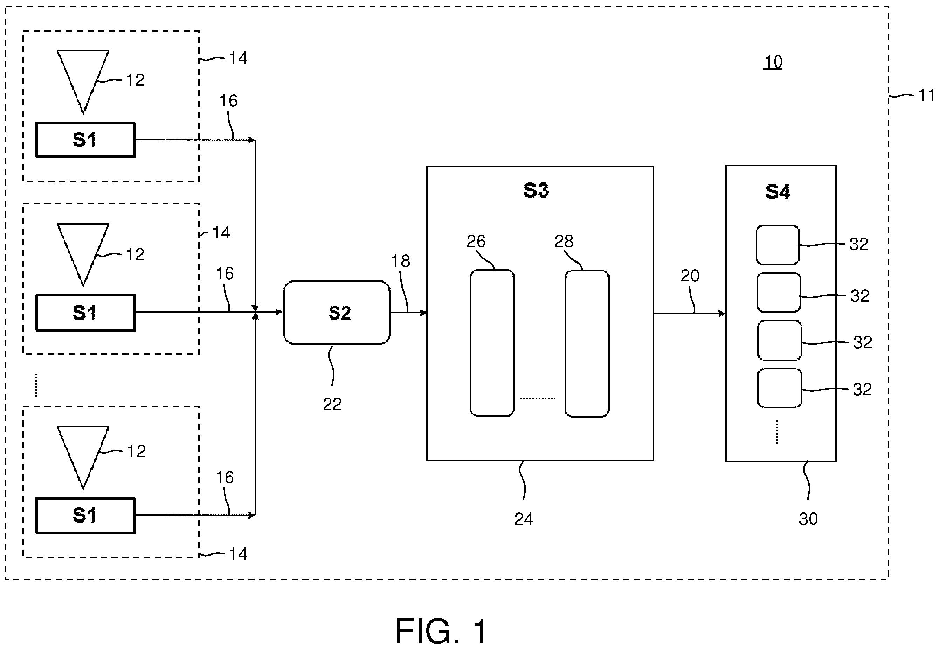

Fig. 1 schematically illustrates an example of how the method and the apparatus according to the inventive concept may be implemented in a system 10 in which the aqueous composition which is to be processed and which contains bodily waste is initially received as blackwater from a plurality of vacuum toilets. As an illustrative example, the system 10 in Fig. 1 may be installed in a department or area 11 within a hospital, such as an intensive care unit or a surgery department where use is made of medical substances that may be unsuitable or harmful in the environment. Especially in the case of antibiotics there may be an increased risk for development of resistant bacteria in sewage pipes or the environment if antibiotics are present for a substantial amount of time.

The system 10 comprises a plurality of vacuum toilets 12, each vacuum toilet 12 being located in an associated toilet room 14 within the department 11. The system may also be design with conventional water-flushed toilets and may also comprise one or more urinals. In the illustrative example in Fig. 1, the system 10 comprises four process stages S1 to S4. As an illustrative example, the vacuum toilets 12 of a system 10 may be used by 100 patients, resulting in about 500 liters of blackwater (including urine and/or feces, cleansing material, rinsing water and said potentially harmful substances) per day (24 hours). The blackwater flushed, i.e. ejected by vacuum, from the toilets 12 may include said potentially harmful medical substances present in a dissolved state in bodily waste.

In the first process stage S1, the blackwater ejected from the vacuum toilets 12 is subjected to an initial treatment, preferably as close as possible to the toilets 12. The first process stage S1 is preferably arranged as far upstream in the system 10 as possible and preferably entirely or at least partly directly adjacent the vacuum toilets 12. Optionally, the first process stage S1 may be at least partly integrated with the vacuum toilets 12. In the illustrated example in Fig. 1, there is a separate first process stage S1 provided for each vacuum toilet 12. The first process stage S1 may typically be arranged within the associated toilet room 14 or directly under or behind a wall of the associated toilet room 14.

In the illustrated embodiment, one part of the first process stage S1 comprises a bacteria reduction treatment arranged to kill many or substantially all bacteria in the ejected blackwater.

In the illustrated embodiment, the bacteria reduction treatment is performed by heating. The bacteria reduction treatment is preferably performed directly after the blackwater has been ejected from the vacuum toilets 12, i.e. as soon as possible in the system close to the point where the blackwater leaves the toilet. Preferably, the blackwater is thereafter maintained in a bacteria-growth preventing heated condition throughout the system, e.g. by the use of heated piping.

The bacteria reduction in process stage S1 directly after ejection from the vacuum toilets 12 should preferably be performed before transferring the blackwater to the subsequent process stages in order to reduce the risk of antibiotic-resistant bacteria being present or growing in the system.

Another part of the first process stage S1 may comprise a fragmentation of the blackwater. Feces and cleansing material will be fragmentized and the resulting fragmentized blackwater could be in the form of a blackwater slurry. The fragmentation allows the blackwater slurry and the final waste material to be transferred via small-diameter piping 16, 18, 20 throughout the rest of the system 10.

Possible inner piping diameter may be in the order of less than 4 cm, preferably 1 to 2 cm as an example. This is especially advantageous if the system 10 is to be post-installed in an existing hospital facility where there is often very limited space and possibilities for installing new piping systems. The fragmentation may also be performed at least partly in pumps used for blackwater transportation in the system.

In the illustrated embodiment, the second process stage S2 of the system 10 comprises at least one central buffer tank 22, optionally a plurality of buffer tanks for larger systems, receiving the initially treated blackwater slurry from each process stage S1. In this embodiment, the buffer tank 22 may be common for all or at least a plurality of the vacuum toilets 12. The main purpose of the buffer tank 22 is to allow an orderly distribution of blackwater slurry into the ongoing vaporization process in the third process stage S3, thereby avoiding a lowering of the temperature in the evaporator and a temporary halt of the ongoing vaporization process every time a toilet is used. Optionally, the buffer tank 22 may be heated. Thus, the buffer tank 22 may be used for temporarily storing the blackwater slurry before the slurry is transferred to the third process stage S3. However, in some situations the temporarily storage may be dispensed with, for example if there is no ongoing vaporization process.

In the illustrated example in Fig. 1, the third process stage S3 of the system 10 constitutes a central process stage for all of the vacuum toilets 12 of the department 11. The third process S3 stage may be located distantly from the vacuum toilets 12 via small-diameter vacuum piping 18. In the example shown, all of the process stages S1 to S4 of the system are located within one and the same department 11, and a similar system may be arranged for each department. As an alternative, the second process stage S2, the third process stage S3 and the fourth process stage S4 may all be located distantly from the vacuum toilets 12, for example in a basement area. Optionally, two or more departments may share a common central buffer tank (S2), a common central vaporization unit (S3) and a common central waste handling unit (S4), located for example in a basement area.

The third process stage S3 comprises a vaporization unit 24 which includes at least one vaporization chamber 26 (evaporator), preferably a plurality of vaporization stages. In this example, the vaporization unit 24 includes two vaporization chambers 26, 28, each vaporization chamber 26, 28 forming a respective vaporization stage of the third process stage S3. The vaporization chambers 26, 28 are preferably reusable chambers since the system may be designed such that major deposits therein can be avoided. The second vaporization chamber 28 forms a second vaporization stage in the unit 24 and may in other embodiment be implemented as a plurality of vaporization chambers, operating in parallel or in series. The blackwater slurry is received from the buffer tank 22, preferably by suction by means of a vacuum pump.

In the vaporization chambers 26, 28, the blackwater slurry is subjected to a vaporization treatment at such temperatures as to convert water contained in the blackwater slurry into vapor. The water vapor is removed from the vaporization chambers and may be condensed and typically discharged into an ambient waste water system, e.g. a public sewage system. Optionally, as described further below, at least some of the hot vapor generated in the first vaporization chamber 26 may be used for heating subsequent vaporization stages in the system. The output from the vaporization unit 24 at piping 20 constitutes a water-reduced blackwater slurry, now referred to as a water-reduced waste material, which especially also contains the potentially harmful medical substances to be isolated. This water-reduced waste material is transferred to the optional fourth process stage S4, preferably by one or more vacuum pumps.

In a multi-stage vaporization unit 24 as in this embodiment, the water content of the initially treated blackwater slurry may be reduced further in each vaporization stage. The optimal degree of evaporation depends on several factors, e.g. the ability to pump the material and the risk of formation of deposits on the inner walls of the vaporization chambers. The resulting waste output from the vaporization unit 24 is in the form of a waste material having a substantially reduced water content compared to the initially ejected blackwater.

The optional fourth process stage S4 of the system 10 comprises a waste handling unit 30 including at least one replaceable waste container 32, preferably a plurality of replaceable, single-use waste containers 32.

The replaceable waste containers 32 may be single-use containers such that each container 32 is used only once and thereafter replaced and destructed together with the final waste material therein. The single-use aspect is especially relevant for embodiments of the inventive concept where a further water reduction is performed in the waste containers, potentially resulting in hard deposits in the waste containers 32. In the example illustrated in Fig. 1, the waste handling unit 30 comprises four waste containers 32, but any number such as ten, twenty or more is possible depending on the system size and system capacity.

In the fourth process stage S4, additional water may optionally be vaporized from the waste material present in the waste containers 32, for producing a further water-reduced final waste material in the waste containers 32. In simpler embodiments, such a further water reduction may be dispensed with.

The waste material may preferably be transferred from the vaporization unit 24 to the individual waste containers 32 in sequence as will be described in further detail below. After having been subjected to final treatment in the waste containers 32, the final waste material is ultimately removed together with the waste containers 32 for destruction (preferably burning).

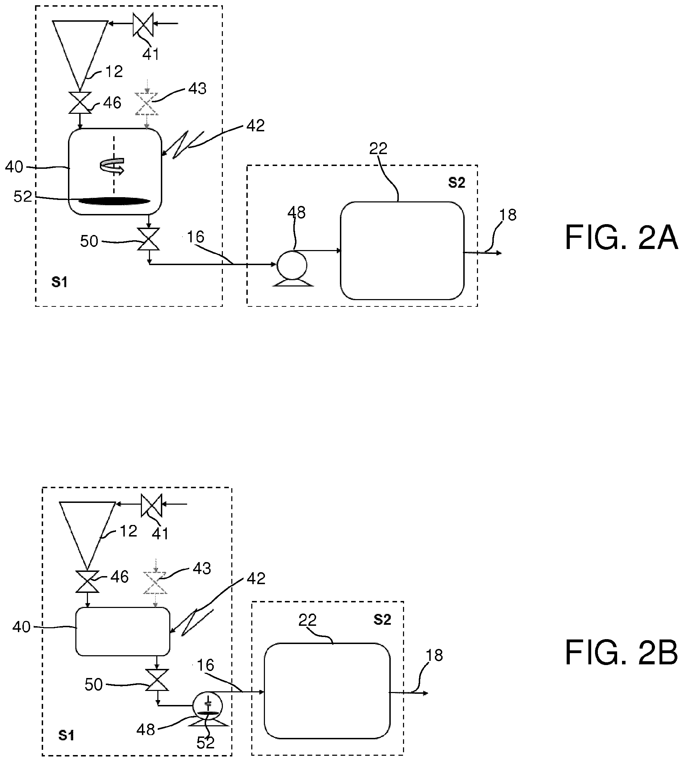

Reference is now made to Fig. 2A and Fig. 2B, which schematically illustrate in greater detail two alternative embodiments of the first process stage S1. The difference between the alternatives essentially lies in where the fragmentation is performed.

In both embodiments, the first process stage S1 comprises a bacteria reduction container 40 which is heated as schematically indicated by reference numeral 42 for performing an initial optional bacteria reduction of the blackwater. In this embodiment heating is used, but as indicated above, other bacteria reduction means may also be used, as alternatives or in combination with heating. The heating may be performed by different means, such as by heating the walls of the container 40 by external means and/or by arranging one or more heating elements inside the container 40. Each bacteria reduction container 40 is here shown as located directly under the associated vacuum toilet 12 in order to receive the ejected blackwater directly therefrom via a vacuum valve 46 and under influence of vacuum or suction force generated by a vacuum pump.

In the illustrated embodiment, a limited amount of cleansing water, e.g. 0,5 liters, is passed via a valve 41 into the toilet 12 at each flushing. A vacuum valve 43 at an upper area of the bacteria reduction container 40 may be used for applying vacuum for flushing of the toilet. This vacuum may come either from a separate source of vacuum or from a central vacuum in the system. The vacuum valve 43 will handle air only, not blackwater. It may be protected from sucking drops or aerosols by use of a protective structure, such as a demister. The bacteria reduction by heating in the bacteria reduction container 40 may continue for a predetermined amount of time after flushing in order to ensure that a desired amount of bacteria in the blackwater is killed, preferably most or all bacteria. The bacteria-reduced blackwater is then transferred from the container 40 via an outlet valve 50 to the buffer tank 22 of the second process stage S2 via piping 16. In this embodiment, a vacuum pump 48 is arranged in the second process stage S2 for this transfer. Thus, there may be one single centralized vacuum pump 48 common to all or a plurality of the vacuum toilets 12 arranged downstream the system 10.

In the illustrated example, the blackwater ejected from the vacuum toilets 12 is subjected to both a bacteria reduction and an initial fragmentation in the first process stage S1 for producing an initially treated blackwater slurry. In other embodiments of the inventive concept, both the bacteria reduction and the fragmentation may optionally be dispensed with. As stated above, one advantage obtained by the initial fragmentation is the possibility of transferring the material with small-diameter piping. However, different options exist as to where the initial fragmentation is performed, and these options may be combined. The initial fragmentation may be performed essentially at the same time as the bacteria reduction (Fig. 2A) or before or after the bacteria reduction (Fig. 2B). The initial fragmentation may be performed at least partly in a pump (Fig. 2B). Smaller-diameter piping 16 may advantageously be used for transferring the blackwater slurry to the buffer tank 22.

Fig. 2A schematically illustrates a preferred embodiment in which at least one fragmentation unit 52 is arranged inside each bacteria reduction container 40, here schematically illustrated as a rotating device 52. Performing the fragmentation already in the bacteria reduction container 40 has the advantage that small-diameter piping can be used in a major part of the system, and that the overall process time may be shortened. The fragmentation of the blackwater may shorten the bacteria reduction time as a result of the stirring action of the fragmentation, and a separate process stage for the fragmentation may be avoided. As a result, it will probably be easier to obtain a considerable or even a total reduction of the number of living bacteria in the blackwater if fragmentized during the heating treatment. In the example in Fig. 2A, the sequence is: vacuum toilet → vacuum ejection of blackwater → bacteria reduction + fragmentation → suction of blackwater slurry → buffer tank.

Fig. 2B illustrates an alternative embodiment in which a pump 48 is arranged in each first process stage S1 and where the fragmentation occurs at least partly in the pump 48, as schematically illustrated at reference numeral 52. This embodiment is an example where a positive pump pressure is used for the transport. In this embodiment, the process sequence is: vacuum toilet → vacuum ejection of blackwater → bacteria reduction → fragmentation during pumping → pumping of blackwater slurry to buffer tank by pressure. Instead of using the pump 48 for the fragmentation it is also possible to use a dedicated fragmentation unit in the first process stage S1 downstream of the bacteria reduction container 40.

In the embodiments illustrated in Fig. 2A and Fig. 2B, the bacteria reduction is performed in a bacteria reduction container 40. The blackwater will remain in the containers 40 for a certain time for completing the bacteria reduction. Thereafter, it is transferred to the buffer tank 22 via piping 16. It may also be possible to design a system 10 in which the bacteria reduction is performed directly after the ejection from the vacuum toilet but without using a separate bacteria reduction container. Instead, one may arrange an in-line heated piping system in which the bacteria reduction is performed while the blackwater is flowing continuously through the piping during ejection/flushing. The piping may have a suitable spiral shape or the like for obtaining the heat exchange within a restricted space.

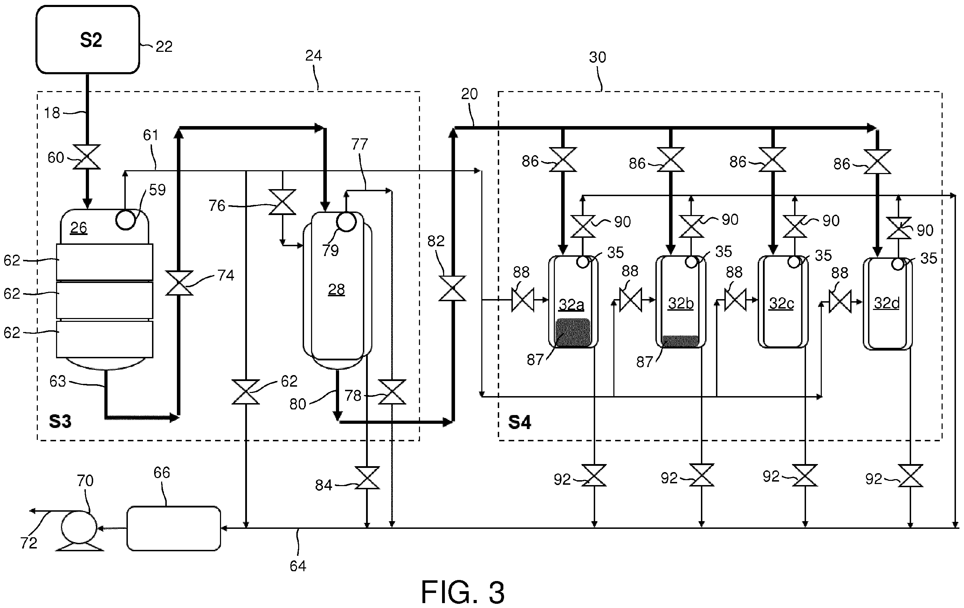

Reference is now made to Fig. 3, schematically showing in greater detail an example of the third process stage S3 and the fourth process stage S4 of the system 10 in Fig. 1. The vaporization unit 24 and the waste handling unit 30 are marked with boxes in dashed lines. The waste transferring piping is marked with thicker lines, whereas piping for hot water vapor and condensed water is marked with thinner lines.

The three process stages S2, S3 and S4 may typically be located relatively adjacent to each other and separately or distantly from the first process stage S1. In alternative embodiments, the process stages S2, S3 and S4 may be implemented as one device. In this non-limiting embodiment, the vaporization unit 24 of the third process stage S3 comprises a first vaporization chamber 26 and a second vaporization chamber 28. The second chamber 28 may be followed by further vaporization chambers (not shown) operating in sequence.

The second chamber 28 may also work in parallel with a plurality of similar additional second vaporization chambers. The design of the vaporization unit 24, such as the number and size of the vaporization chambers, will be optimized with respect to the required vaporization capacity balanced against system costs. Sensors (not shown) may be arranged for determining the temperature, the pressure and the fill level of the vaporization chambers of the vaporization unit 24.

The first vaporization chamber 26 is connected to the buffer tank 22 via the piping 18 and a control valve 60 for receiving blackwater slurry from the buffer tank 22. This may be performed in batches at suitable time intervals. Depending on the present evaporation status in the first vaporization chamber 26, the blackwater slurry may in some situations be transferred directly to the vaporization unit 24 without temporarily storage in the buffer tank 22.

Preferably, new blackwater slurry is introduced into an ongoing vaporization process in the first vaporization chamber 26 only a few times per day, since addition of blackwater may temporarily halt the vaporization process. The first vaporization chamber 26 is provided with one or more mantle heaters 62 for heating the blackwater slurry in the first vaporization chamber 26 to a temperature causing water of the blackwater slurry to evaporate. The generated hot water vapor is removed from the upper part of the first chamber 26 at piping 61.

Part of the vapor may be transferred, by a pump 70, via a valve 62, a main pipe 64 and a condenser 66 to an ambient system at 72, such as a public sewage system. In the illustrated example, the mantle heater 62 may comprise a plurality of heating elements which may be separately activated depending on the material level in the chamber 26. Water-reduced blackwater slurry produced by the vaporization is removed from the first vaporization chamber 26 at the bottom part thereof at piping 63 and is transferred via a control valve 74 to the second vaporization chamber 28 at the top thereof.

In the illustrated embodiment, the second vaporization chamber 28 is a double-walled container and may have a smaller volume than the first vaporization chamber 26, as an example a third of the volume of the first vaporization chamber 26. The double-walled structure is used for heating the second vaporization chamber 28 by vapor. In the illustrated example, the vapor generated by the first vaporization chamber 26 is transferred via the piping 61 and a control valve 76 into the double-walled structure of the second vaporization chamber 28. Excess vapor from the first vaporization chamber 26 may, via the control valve 62, be transferred to the main pipe 64. One or more protective structures 59, such as one or more demisters, may be arranged where the water vapor is evacuated at 61. These protective structures 59 may be located inside and/or outside of the first vaporization chamber 26.

In some embodiments, the heat content of the vapor from the first vaporization chamber 26 may be so high that the evaporation in the second vaporization chamber 28 may be performed in half the time needed in the first vaporization chamber 26. As will be described below, the hot vapor generated by the first vaporization chamber 26 may also be used for heating the waste handling unit 30. Vapor from the second vaporization chamber 28 is transferred via piping 77 and a valve 78 to the main pipe 64. One or more protective structures 79 such as one or more demisters, may be arranged where the water vapor is evacuated at 77. These protective structures 79 may be located inside and/or outside of the second vaporization chamber 28.

The water-reduced waste material is removed from the lower part of the second vaporization chamber at reference numeral 80 and is transported via a control valve 82 to the waste handling unit 30.

Heating the second vaporization chamber 28 by hot vapor entering the double-walled structure is advantageous in terms of heat transfer. The heat transfer to the contents inside the chamber 28 will be more efficient since the condensation of the hot vapor will mainly occur in the zone where the vaporization takes place. Thereby, the vaporization operation in the second vaporization chamber 28 may be performed with little loss of efficiency as the level drops. Condensed water may exit the double-walled structure at the lower part thereof and be transferred to the main pipe 64 via a valve 84.

The water-reduced blackwater slurry, now referred to as water-reduced waste material, is transferred from the vaporization unit 24 via the valve 82 to the optional waste handling unit 30. In this embodiment, the waste handling unit 30 comprises four waste containers 32a to 32d. Fig. 3 schematically illustrates how the fill level 87 may differ in the waste containers 32. The water-reduced waste material from the vaporization unit 24 is introduced into the waste containers 32a to 32b via associated control valves 86. In the waste handling unit 30, the waste material is subjected to an optional final water reduction by evaporation in the waste containers 32 or at another location. In the illustrated example, the waste containers are heated by hot vapor evacuated from the first vaporization chamber 26 and transferred to the respective waste containers 32 via associated valves 88 and into a double-walled cylinder, which may be part of the waste container or a separate heater. In the replaceable waste containers, the waste material is subjected to a final water reduction and the vapor is evacuated at the top and transferred to the main pipe 64 and the condenser 66 via associated valves 90. Vapor and condensed water from the heated double-walled cylinder is evacuated at the lower part and transferred via associated valves 92 to the main pipe 64. One or more additional protective structures 35, such as one or more demisters, may be arranged where the water vapor is evacuated from the waste containers 32.

The system 10 as shown in the figures may operate as described below. Computer means and electronics (not shown) may be used to control the whole process on the basis of signals received from various temperature, pressure and level sensors and also on the basis of control signals being sent to the various valves. In addition, one or more vacuum pumps may be used for transporting the blackwater, the blackwater slurry and waste material as well as for reducing the pressure in the vaporization chambers and/or the waste containers to facilitate formation of water vapor through vaporization.

### Example

As an illustrative example, system may be designed and be operated as follows:

**Double-walled cylinder for heating by hot vapor**

| | |
|---|---|
| Treated blackwater volume | 300-500 liters/day |
| Total amount of final waste material | 30-60 kg/day |
| Total volume | 160 liters |
| Maximum fill volume | 100 liters |
| Height | m |
| Diameter | 450 mm |
| Heating effect | 8,4 kW |
| Operating temperature | °C |
| Operating pressure | 0,7 -0,85 bar |
| Total volume | 50 liters |
| Maximum fill volume | 33 liters |
| Height | m |
| Diameter | 250 mm |
| Operating temperature | °C |
| Operating pressure | 0,5 bar |
| Total volume | 4 * 50 liters |

**Replacement interval of waste containersAbout once per 3-6 days**

| | |
|---|---|
| Operating temperature | 95 °C |
| Operating pressure | 0,7 - 0,85 bar |

As described above, each bacteria-reduction container 40 may be provided with two suction outlets (Fig 2A to 2B):
- The top suction outlet at flushing valve 43 for applying flushing vacuum for drawing the blackwater from the toilet 12 into the container 40.
- The bottom suction outlet at the bottom valve 50 for transporting the blackwater slurry out from the container 40 after the blackwater has been processed in the container 40 for a suitable time period and at a suitable temperature.

The container 40 is preferably provided with a pressure sensor (not shown) for determining the pressure inside the container 40. The opening degree of the flushing valve 43 is pressure controlled. Normally, the flushing valve 43 is open to a small degree such that the pressure is close to atmospheric pressure, but preferably a bit lower, e.g. at 0,9 atm. A slight subatmospheric pressure may prevent leakage of unpleasant odors.

When the toilet 12 is to be flushed by the user pressing a button or the like, the cleansing water valve 41 is opened and the flushing top valve 43 is more opened in order to create a substantial suction effect on the blackwater being drawn into the container 40. However, this will occur only provided there is enough available space in the container 40. Thus, the container 40 may also be provided with a level sensor (not shown). During flushing, the bottom outlet valve 50 is closed. Optionally, the top outlet of the container 40 may be provided with a protective structure such as a demister (not shown) in order to prevent drops, containing untreated material, caused by splashing from exiting through the valve 43 into the system. When heating is used for performing the bacteria reduction, the system may be designed such that bacteria reduction by heating and the fragmentation is initiated in response to the flushing, for instance a short period (e.g. 5 seconds) after flushing has been initiated. The heating may be controlled by a temperature sensor (not shown). When the temperature of the material has reached a predetermined temperature, for example 90 degrees, the temperature is maintained at this level for a predetermined time period, for example 30 seconds, to complete the bacteria reduction.

The heating process may be performed in many ways. As an example, the container 40 may be pre-heated to e.g. 60 degrees and then heated to a higher temperature only when needed. As an alternative, the heating could be applied only at flushing, but that would probably somewhat delay the process. In order to shorten the processing time, it is possible to use heated water for the cleansing water at valve 41. If the temperature of the hot water in the hospital piping is insufficient, such heated cleansing water may optionally be generated by producing hot water at or near the toilet 12.

When the heating and the fragmentation has been carried out during a desired time period, the top valve 43 is closed (if not closed earlier) and the bottom outlet valve 50 is opened such that the initially treated blackwater slurry is ejected from the container 40 by the pump 48 and transferred to the buffer tank 22. The suction for emptying the container 40 may also be generated by one or more central pumps downstream the system, as an alternative to or in addition to the pump 48. Optionally, the container 40 may be provided with air inlet means such that air can enter into the container 40 while the slurry is pumped out. When the bottom valve 50has been open for a predetermined time and/or possibly under control by the level sensor, the bottom valve 50 is closed again, e.g. after 15 seconds. As an alternative, the container 40 is not emptied until after more than one flushing.

In the case where the toilet 12 has been flushed multiple times during a short time period, it may occur that the container 40 becomes full. In such situations, the control electronics may be designed such that flushing of the toilet 12 is deferred until the processing in the container has been completed.

As an example, the time periods for the different sequences in process stage S1 may be as follows: Blackwater ejected from the toilet 12 into the container 40 during about 15 seconds. About 30 seconds for reaching the target temperature in the container 40. Fragmentation may start directly at flushing or very shortly thereafter. Bacteria-reduction by heating during about 30 seconds. Emptying through bottom valve 45 during about 15 seconds. Thus, a total of about 1,5 minutes for one complete flushing and initial processing sequence. It may here be mentioned that if may be advantageous (but not necessary) to activate the fragmentation during the heating, since a stirring of the material will facilitate that the correct temperature is reached in all of the material in the container 40.

The blackwater slurry may be temporarily stored in the buffer tank 22 and may be transferred in batches to the first vaporization chamber 26. Such transfer may typically be initiated in response to that the vaporization process in the first vaporization chamber 26 has been performed to a desired degree, and when at least part of the remaining contents in the first vaporization chamber 26 has been transferred to the second vaporization chamber 28.

The tendency to form deposits on the walls of the second vaporization chamber 28 differs between different water solutions, and may be determined in preliminary examinations for all water solutions that are fed into the system 10. The vaporization process in the second vaporization chamber 28 may be stopped at an optimum time, when the remaining water content is still high enough to secure that there is a sufficient fluidity and that there is only a small tendency for formation of deposits on the walls of the second vaporization chamber 28, but the water content being as small as possible. At the optimum time, the remaining concentrated material, now referred to as "waste material" is transferred from the second vaporization chamber 28 via the valve 82 to the waste handling unit 30. In the illustrated embodiment, the water content is reduced further in the waste handling unit 30. Pumps may be used for reducing the pressure in the vaporization chambers 26, 28 and/or the waste containers 32, making it possible for the contents to boil at temperatures below 100°C by creating below-atmospheric pressure.

In the first vaporization chamber 26, the initial blackwater slurry volume of 100 liters may be reduced to 2/3 by vaporization of water being removed as vapor. Of the 66 liters of water-reduced blackwater slurry remaining in the first vaporization chamber 26, 33 liters are pumped via 63, 74 to the second vaporization chamber 28.

Thereafter, additional blackwater slurry is pumped to the first vaporization chamber 26 from the buffer tank 22, such that the first chamber 26 all the time during vaporization presents a fill volume which varies between the maximum fill volume (100 liters) and 2/3 of the maximum fill volume. In this example, the final amount of waste material in the waste containers could be in the range of 30 - 60 kg per day. It should be noted that the numbers here are only given by example and could vary substantially.

Preferably, the degree or speed of vaporization in the first vaporization chamber 26 is higher for higher fill volumes. When full, all heating elements 62 may be active, whereas only one or two heating elements 62 may be active when the chamber is less full.

In the vaporization unit 24, the water content of the initially treated blackwater slurry may be reduced by 30% to 95%, preferably 50% to 95%, and most preferably 70% to 95%, Thereby, the water reduced waste material produced in the vaporization unit 24 may contain a remaining water content of 70% to 5%, preferably 50% to 5%, and most preferably 30% to 5%, of the initial water content. This remaining water content in the waste material will be sufficient to avoid major deposits in the vaporization chambers 26, 28. No or only minor deposits will occur.

The water content of the waste material from the vaporization unit 24 may in this embodiment be further reduced in the waste handling containers 32 such that the water content in the final waste material contained in said waste containers 32 is further reduced by 10% to 100%, preferably 30% to 100%, and most preferably by 50% to 100%.

The combined water-reduction in the vaporization unit 24 and the waste handling unit 30 may be such that the final water content in the final waste material is 10% to 0% of the initial blackwater, preferably 5% to 0%, and most preferred 0%, i.e. a completely or essentially completely dry final waste material. This final reduction of water in the waste containers 32 results in a very substantial reduction of produced waste material from the system 10. Even if such final vaporization in the waste handling unit 30 results in an almost dry or completely dry final waste material in the waste containers 32, this will cause no problems with deposits since the waste containers 32 will be removed when filled and replaced by new empty containers.

Condensed water from the pump 70 at reference numeral 72 being substantially free from any potentially harmful medical substances may be discharged directly into the waste water system, e.g. a public sewage system.

Reference is now made to Fig. 4A to 4C illustrating three alternative schemes for operating the waste handling unit 30. In all the alternatives, the waste containers are filled in sequence. In Fig. 4A, waste container #1 is first filled via its control valve 86. When #1 is full, the drying is initiated in #1 by activating the associated vapor valve 88 and the filling is thereafter made in container #2. When container #1 is dry and perhaps 75% of the contents has been removed as vapor, it may be filled again in a second fill cycle. Thus, for each waste container 32, the sequence of operation may be: filling → drying → new filling → drying, etc. until the container is filled to a desired level, after which it is replaced. In Fig. 4A, the filling and drying cycles are equal. In Fig. 4B and Fig. 4C, a drying cycle is twice as long or three times as long, respectively, as a filling cycle. When all cycles have been completed, the waste containers 32 with the final water-reduced waste material therein are removed for destruction and replaced with new containers. Other types of filling cycles are also possible.

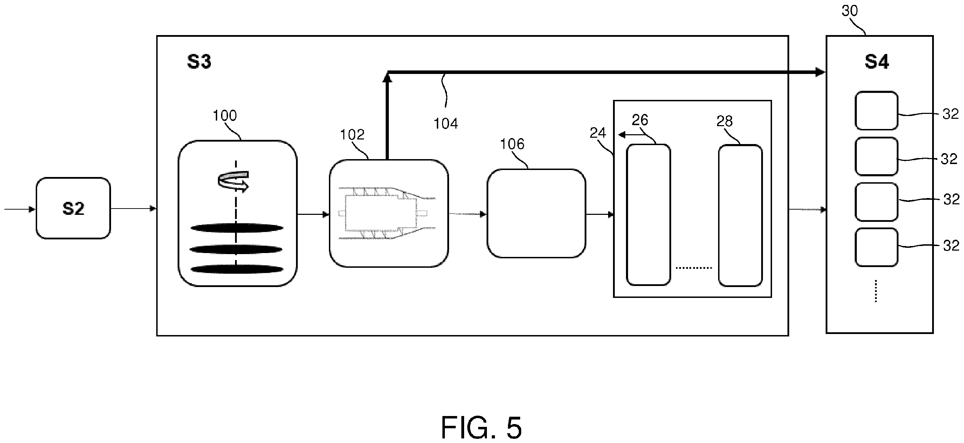

Reference is now made to Fig. 5, which schematically illustrates optional further equipments in the third process stage S3. These equipments may be used individually or in combination, and also in other mutual orders than the order shown in Fig. 5

As a first optional equipment, a central fragmentation unit 100 may be arranged to further fragmentize the blackwater slurry before it enters the central vaporization unit 24. In this unit 100, the already fragmentized solids in the slurry, especially fragmentized toilet paper, may be further fragmentized into even smaller fragments or pieces, thereby reducing the risk of cellulose deposits on the inner walls of the vaporization chambers 26, 28.

As a second optional equipment, a solid-matter removal unit 102 may be arranged to remove solids from the blackwater slurry before the slurry enters the vaporization unit 24, for instance a decanter centrifuge arranged before the vaporization unit 24. The solids removed, such as cellulose fragments (small toilet paper pieces) and feces particles may be transferred at 104 to the waste handling unit 30 in order to be handled together with the waste material received from the vaporization unit. Further water can be removed by vaporization at this point.

As a third optional equipment, a chemical treatment unit 106 may be arranged to break down cellulose (toilet paper fragments) in the blackwater slurry. The blackwater slurry may be subjected to the cellulose breakdown treatment during a suitable time period before being transferred further. Thereby, one may prevent or at least substantially reduce deposits of cellulose fragments (small pieces of toilet paper) on the inner walls of the vaporization chamber(s). Such a chemical treatment unit 106 may advantageously be combined with the central fragmentation unit 100. The chemical treatment may as an example include the use of cellulase or strong acids such as hydrochloric acid.

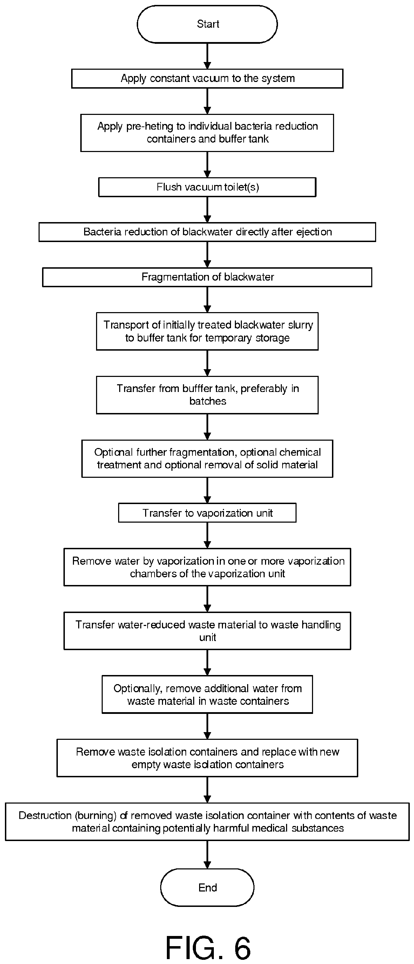

Fig. 6 illustrates various steps of an embodiment of a method according to the inventive concept.

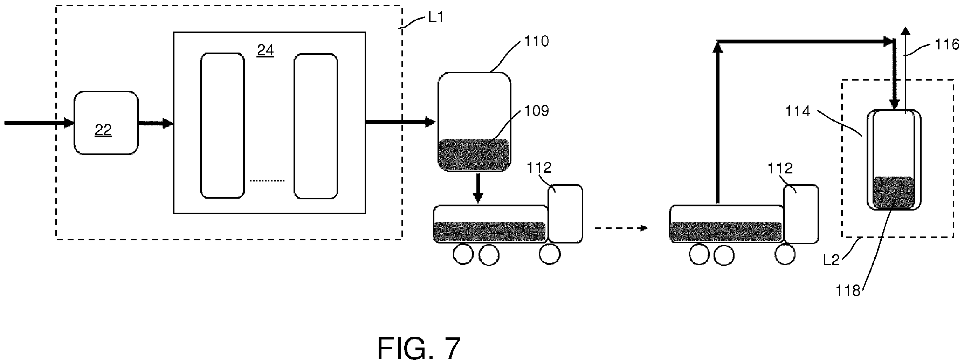

Fig. 7 schematically illustrates an alternative handling of the waste material from the evaporation unit 24. In this alternative embodiment, an apparatus according to the inventive concept, comprising the buffer tank 22 and the evaporation unit 24, is located at a first location L1. The water-reduced waste material 109 from the vaporization unit 24 is transferred to a tank 110. The waste material is thereafter transported by trucks 112 to another location L2. In the illustrated embodiment, one or more waste containers 114 corresponding to the waste containers 32 in Fig. 3 are arranged to receive the waste material from the trucks 112, optionally after storage in one or more buffer tanks. At the second location, a further water-reduction of the waste material by heating and/or low pressure may then be performed for producing a further water-reduced waste material 118. As in the previous example, the generated water vapor may be removed from the container 114 at 116 and optionally be transferred to a waste water system or to the environment. Thereafter, as described with reference to Fig. 3, the waste container 114 and the further water-reduced material therein may be destructed. It is also possible to perform the additional water reduction at L2 and then transfer the finally water-reduced waste material to further containers for destruction, optionally at a third location.

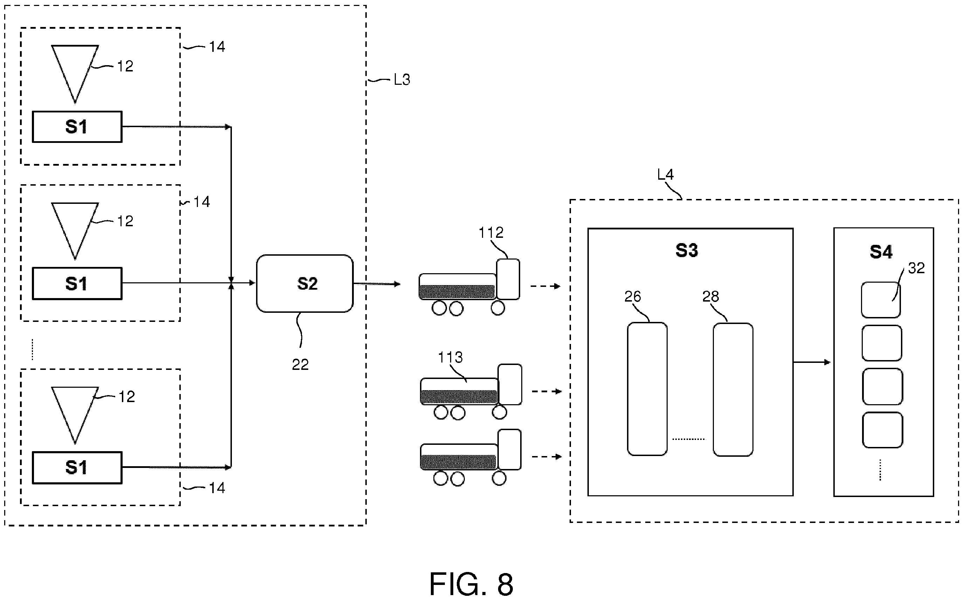

Fig. 8 schematically illustrates a further alternative embodiment, in which the optional first process stage S1 and the second process stage S2 are arranged at a first location L3, such as a hospital, and in which the third process stage S3 and the fourth process stage S4 are arranged at a different second location L4, such as a plant for receiving and processing aqueous compositions from one or more first locations L3. In this alternative embodiment, an apparatus according to the inventive concept, comprising the buffer tank 22 and the evaporation unit 24, is divided between the first location L3 and the second location L4. The aqueous composition here in the form of blackwater from a number of toilets 12 is processed in the first process stage S1 and is thereafter transferred to one or more buffer tanks 22 for temporary storage at the first location L3. The blackwater is thereafter transferred from the buffer tank 22 to trucks 112, 113 and transported to the second location L4. Here, the blackwater is processed by the vaporisators in the third process stage S3, optionally after storage in one or more buffer tanks. The waste material from S3 is received in and optionally processed in the fourth process stage S4 as described above. Alternatively, the S4 stage may be performed at another location than L4. Thereafter, as described with reference to Fig. 3, the waste material may be destructed.

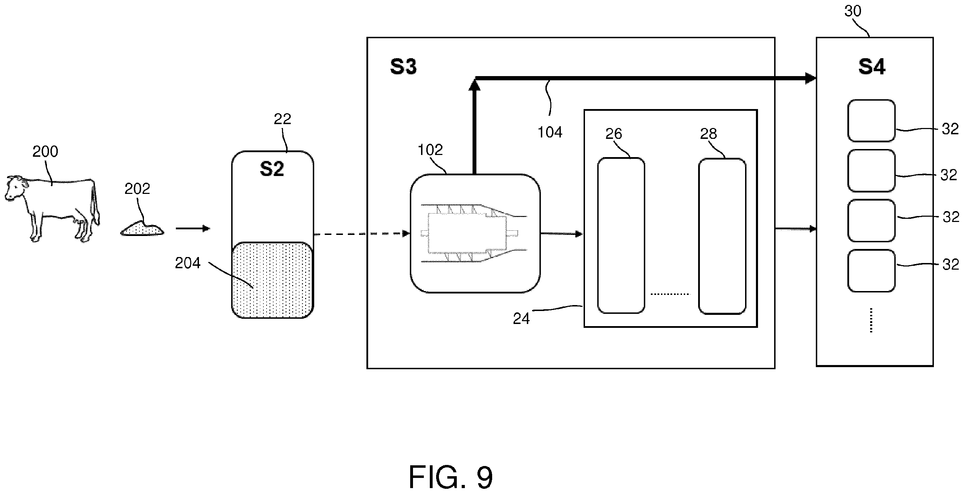

Fig. 9 schematically illustrates a further alternative embodiment, in which the aqueous composition comprises animal bodily waste or blackwater comprising animal bodily waste and optionally additional water. In Fig. 9, animal bodily waste 202, e.g. manure, from cows 200 is initially collected in a buffer tank 22. The material 204 is temporarily stored in the buffer tank 22.

At suitable times, some or all of the material 204 is removed from the buffer tank 22 and transferred to process stage S3 and optionally process stage S4. As indicated by a dashed arrow in Fig. 9, this transfer may be between different locations, such as by a truck transport from a farm to a process plant at a different location. In the third process stage S3, the material, after an optional storage in one or several buffer tanks, is subjected to a solid-matter removal in a unit 102 as described in connection with Fig. 5. Thereafter, the material is transferred in batches to the vaporization unit 24 at suitable times, optionally via one or more buffer tanks. The solid matter removed in the unit 102 may, as described in Fig 5, be subjected to a further water reduction, in this embodiment performed in the waste handling unit 30 together with the water-reduced waste material from the vaporization unit 24. Thereafter, as described above, the water-reduced waste material may be destructed, preferably by incineration in a high-temperature oven.

### Alternative embodiments

The embodiment described above and as shown in the figures may be varied in many ways without departing from scope of the claims.

In the example illustrated and described with reference to Fig. 1 to Fig. 3, the aqueous composition is received as blackwater from vacuum toilets. However, the method and the apparatus according to the inventive concept may be used or implemented in other systems and applications, and the embodiment in Fig. 1 to Fig. 3 may be modified accordingly.

For instance, the inventive concept may also be used in connection with conventional water-flushed toilets where water, instead of air pressure difference, is used for transporting the blackwater. The aqueous composition may also be urine from one or more urinals. One or more of the pumps and valves associated with the vacuum operation in Fig. 3 may be dispensed and optionally be replaced with other equipment. If it is desired to transfer the blackwater from conventional water-flushed toilets through smaller-diameter piping as described above, the blackwater may be subjected to a fragmentation as described above. However, it may also be possible to dispense with the initial fragmentation and transfer the blackwater, without any initial fragmentation treatment, in conventional piping downstream the system. It may be advantageous in a conventional water-flushed toilet system to process the blackwater before it is received in the vaporization unit. Thus, there may be a solid-matter removal unit and/or a fragmentation unit and/or a chemical treatment unit upstream of the vaporization unit, and optionally one or more buffer tanks may be arranged upstream and/or downstream such units.

Depending on the type of aqueous composition processed and depending on the implementation, one or more of the components and steps as described above may be dispensed with, including but not limited to: the bacteria reduction, the initial fragmentation, the fluid connection to toilets and/or urinals, the waste containers, the protective structures, the use of vapor for heating, the further water reduction in the waste containers, the central solid-matter removal, the central fragmentation and the central chemical treatment.

The number of units in each stage may vary: The aqueous composition may comprise blackwater from an indefinite number of vacuum toilets. There may be more than one buffer tank. The vaporization unit may comprise an indefinite number of evaporators and there may be as many waste containers as needed.

With respect to the heating, there may be many other ways to heat the contents in both the vaporization chambers 26, 28 and the waste containers 32, including using heating elements which may at least partly be immersed in the liquid or placed around the chambers, microwaves, induction, etc. The double wall cylinder used for heating a waste container 32 may be separate from the waste container 32 such that only the waste container and not the double-walled cylinder is replaced. As an alternative, the double-walled cylinder for heating may be integrally formed with the waste container and thus being part of the waste container being replaced. In the embodiment shown, the hot vapor from the first vaporization chamber 26 is used for heating subsequent steps. However, separate heating solutions for the subsequent steps are also possible.

In alternative embodiments, the arrangement and number of pumps may differ from the illustrated example. For instance, there may be a vacuum pump arranged at each buffer tank, preferably downstream of the buffer tank. This suction may be used for ejecting the blackwater from the toilets. It is also possible to use a central suction from one or more central pumps downstream of the central vaporization unit for transporting the material through the system.

In order to make sure that the water vapor from the vaporization unit and/or from the waste handling unit is sufficiently clean, the system may further comprise an analytical unit (not shown) to evaluate the vapor purity. The evaluation may be done for instance either by measuring conductivity of condensed vapor or by determining its absorbance. The calculated data may be registered, stored and/or presented to a system operator via a control panel. The system may have online monitoring of the quality of the process. A continuous quality control may ensure that the condensed vapor from vaporization is sufficiently pure to be released in the public sewage system.

The number and arrangements of vaporization chambers may differ from the illustrated embodiment. In alternative embodiment, there may be only one single vaporization chamber or two or more chambers operating in parallel. For instance, there may be a plurality of first vaporization chambers 26 operating in parallel. In a system for a larger hospital, there may for instance be 5 to 10 first and second vaporization chambers operating in parallel.

In other embodiments, the arrangement for using the generated vapor for heating may differ. As an example, the hot vapor generated in the waste containers 32 may be transferred via valves to the wall of the second chamber 28 in order to save energy.

In the example above, the vapor generated in the process stages S3 and S4 is condensed and released to a public sewage system. In alternative embodiments, the condensed water may be released into a water tank or even a ditch. Alternatively, the vapor can be let out for instance into the ambient air without first being condensed into water.

## Claims

1. A method for handling bodily waste including medical substances, such as antibiotics, present in dissolved state in the bodily waste, said method comprising:
in at least one buffer tank (22), receiving an aqueous composition containing medical substances present in dissolved state in bodily waste;
temporarily storing the aqueous composition in the buffer tank (22);
transferring the aqueous composition in batches from the buffer tank (22) to a vaporization unit (24) comprising one or more vaporization chambers (26, 28);
in said one or more vaporization chambers (26, 28), vaporizing water from the aqueous composition for producing a water-reduced waste material containing said medical substances, wherein, the water content of the aqueous composition is reduced in the vaporization unit (24) by 30-95%;
passing the vaporized water through one or more protective structures (59, 79), such as one or more demisters, arranged to prevent aerosols or droplets to pass through;
transferring the waste material from the vaporization unit (24) to a plurality of waste containers (32);
vaporizing additional water from the waste material in said waste containers (32) by heating and/or pressure reduction, for producing a further water-reduced waste material;
removing and replacing said one or more waste containers (32) containing said waste material; and
subjecting removed waste containers (32) together with the waste material contained therein to a destructive treatment, such as a high-temperature incineration process;
wherein the waste material is transferred (20) from the vaporization unit (24) into said plurality of waste containers (32) in sequence such that while one or more waste containers (32) are being filled, water is being vaporized, by heating and/or pressure reduction, from waste material present in one or more previously filled waste containers (32).

2. The method as claimed in claim 1, wherein, the water content of the aqueous composition is reduced in the vaporization unit (24) by 50-95%, preferably by 70-95%.

3. The method as claimed in claim 1 or 2, further comprising heating said one or more protective structures (59, 79).

4. The method as claimed in claim 1, wherein said vaporizing additional water from the waste material in the waste containers (32) is performed before removing the waste containers (32).

5. The method as claimed in any of the preceding claims, wherein the water content of the waste material contained in said plurality of waste containers (32) is further reduced by 10-100%, preferably 30-100%, and most preferably 50-100%.

6. The method as claimed in any of the preceding claims, wherein the aqueous composition comprises blackwater from one or more toilets (12) and/or from one or more urinals.

7. The method as claimed in any of the preceding claims, wherein the aqueous composition comprises a fragmentized blackwater slurry obtained by fragmentizing blackwater.

8. The method as claimed in claim 1, wherein said aqueous composition is a fragmentized slurry.

9. An apparatus for handling bodily waste including medical substances, such as antibiotics, present in dissolved state in the bodily waste, said apparatus comprising:
at least one buffer tank (22) which is arranged to receive and temporarily store an aqueous composition containing medical substances present in dissolved state in bodily waste;
a vaporization unit (24) which is arranged to receive the aqueous composition in batches from the buffer tank (22), said vaporization unit (24) comprising one or more vaporization chambers (26, 28) arranged to vaporize water from the aqueous composition for producing a water-reduced waste material, wherein the vaporization unit (24) is arranged to reduce the water content of the aqueous composition by 30-95%;
one or more protective structures (59, 79), such as one or more demisters,
which are arranged to prevent aerosols or droplets in the vaporized water to pass through; and
a plurality of replaceable waste containers (32) which are arranged to receive (20) the water-reduced waste material from the vaporization unit (24);
means for vaporizing, by heat and/or pressure reduction, additional water from the waste material in said waste containers (32) for producing a further water-reduced waste material;
wherein the apparatus is arranged to transfer the waste material from the vaporization unit (24) into said plurality of replaceable waste containers (32) in sequence such that while one or more waste containers (32) are being filled, water is being vaporized, by heat and/or pressure reduction,
from waste material present in one or more previously filled waste containers (32).

10. The apparatus as claimed in claim 9, wherein the vaporization unit (24) is arranged to reduce the water content of the aqueous composition by 50-95%, and preferably by 70-95%.

11. The apparatus as claimed in claim 9 or 10, wherein said one or more protective structures (59, 79) comprise one or more heated protective structures.

12. The apparatus as claimed in claim 9, wherein said means for vaporizing additional water from the waste material is arranged to further reduce the water content of the waste material by 10-100%, preferably 30-100%, and most preferably 50-100%.

13. The apparatus as claimed in any of claims 9 to 12, wherein the aqueous composition comprises blackwater from one or more toilets (12) and/or one or more urinals.

14. The apparatus as claimed in claim 13, wherein said at least one buffer tank (22) comprises a plurality of buffer tanks each arranged to receive blackwater from one or more toilets (12) and/or one or more urinals.

15. The apparatus as claimed in any of claims 9 to 14, further comprising fragmentation means (52) arranged to fragmentize blackwater for producing a fragmentized blackwater slurry and wherein said aqueous composition comprises said fragmentized blackwater slurry.

## Patentansprüche

1. Verfahren zum Handhaben von Körperausscheidungen, die medizinische Substanzen, wie zum Beispiel Antibiotika, die in den Körperausscheidungen in gelöstem Zustand vorhanden sind, umfassen, wobei das Verfahren Folgendes umfasst:
in wenigstens einem Puffertank (22) Aufnehmen einer wässrigen Zusammensetzung, die medizinische Substanzen enthält, die in Körperausscheidungen in gelöstem Zustand vorhanden sind,
vorübergehendes Speichern der wässrigen Zusammensetzung in dem Puffertank (22),
schubweises Überführen der wässrigen Zusammensetzung von dem Puffertank (22) zu einer Verdampfungseinheit (24), die eine oder mehrere Verdampfungskammern (26, 28) umfasst,
in der einen oder den mehreren Verdampfungskammern (26, 28) Verdampfen von Wasser aus der wässrigen Zusammensetzung, um wasserreduziertes Ausscheidungsmaterial zu erzeugen, das die medizinischen Substanzen enthält, wobei der Wassergehalt der wässrigen Zusammensetzung in der Verdampfungseinheit (24) um 30-95% reduziert wird,
Leiten des verdampften Wassers durch eine oder mehrere Schutzstrukturen (59, 79), wie zum Beispiel einen oder mehrere Tropfenabscheider, die so angeordnet sind, dass sie verhindern, dass Aerosole oder Tröpfchen durchtreten,
Überführen des Ausscheidungsmaterials von der Verdampfungseinheit (24) zu einer Vielzahl von Abfallbehältern (32),
Verdampfen von zusätzlichem Wasser aus dem Ausscheidungsmaterial in den Abfallbehältern (32) durch Erhitzen und/oder Druckminderung, um weiteres wasserreduziertes Ausscheidungsmaterial zu erzeugen,
Entfernen und Austauschen des einen oder der mehreren Abfallbehälter (32), die das Ausscheidungsmaterial enthalten, und
Unterziehen der entfernten Abfallbehälter (32) einer Zerstörungsbehandlung, wie zum Beispiel einem Hochtemperaturverbrennungsvorgang, zusammen mit dem in denselben enthaltenen Ausscheidungsmaterial,
wobei das Ausscheidungsmaterial auf eine solche Weise der Reihe nach von der Verdampfungseinheit (24) in die Vielzahl von Abfallbehältern (32) überführt wird (20), dass, während ein oder mehrere Abfallbehälter (32) befüllt werden, Wasser durch Erhitzen und/oder Druckminderung aus dem Ausscheidungsmaterial, das in einem oder mehreren zuvor befüllten Abfallbehältern (32) vorhanden ist, verdampft wird.

2. Verfahren nach Anspruch 1, wobei der Wassergehalt der wässrigen Zusammensetzung in der Verdampfungseinheit (24) um 50-95%, vorzugsweise um 70-95% reduziert wird.

3. Verfahren nach Anspruch 1 oder 2, ferner umfassend das Erhitzen der einen oder der mehreren Schutzstrukturen (59, 79).

4. Verfahren nach Anspruch 1, wobei das Verdampfen von zusätzlichem Wasser aus dem Ausscheidungsmaterial in den Abfallbehältern (32) durchgeführt wird, bevor die Abfallbehälter (32) entfernt werden.

5. Verfahren nach einem der vorhergehenden Ansprüche, wobei der Wassergehalt des Ausscheidungsmaterials, das in der Vielzahl von Abfallbehältern (32) enthalten ist, weiter um 10-100%, vorzugsweise um 30-100% und besonders bevorzugt um 50-100% reduziert wird.

6. Verfahren nach einem der vorhergehenden Ansprüche, wobei die wässrige Zusammensetzung Schwarzwasser aus einer oder mehreren Toiletten (12) und/oder aus einem oder mehreren Urinalen umfasst.

7. Verfahren nach einem der vorhergehenden Ansprüche, wobei die wässrige Zusammensetzung eine fragmentierte Schwarzwasserjauche umfasst, die sich durch Fragmentieren von Schwarzwasser ergibt.

8. Verfahren nach Anspruch 1, wobei es sich bei der wässrigen Zusammensetzung um eine fragmentierte Jauche handelt.

9. Vorrichtung zum Handhaben von Körperausscheidungen, die medizinische Substanzen, wie zum Beispiel Antibiotika, die in den Körperausscheidungen in gelöstem Zustand vorhanden sind, umfassen, wobei die Vorrichtung Folgendes umfasst:
wenigstens einen Puffertank (22), der so angeordnet ist, dass er eine wässrige Zusammensetzung, die medizinische Substanzen enthält, die in den Körperausscheidungen in gelöstem Zustand vorhanden sind, aufnimmt und vorübergehend speichert,
eine Verdampfungseinheit (24), die so angeordnet ist, dass sie die wässrige Zusammensetzung schubweise aus dem Puffertank (22) aufnimmt, wobei die Verdampfungseinheit (24) eine oder mehrere Verdampfungskammern (26, 28) umfasst, die so angeordnet sind, dass sie Wasser aus der wässrigen Zusammensetzung verdampfen, um wasserreduziertes Ausscheidungsmaterial zu erzeugen, wobei die Verdampfungseinheit (24) so angeordnet ist, dass sie den Wassergehalt der wässrigen Zusammensetzung um 30-95% reduziert,
eine oder mehrere Schutzstrukturen (59, 79), wie zum Beispiel einen oder mehrere Tropfenabscheider, die so angeordnet sind, dass sie verhindern, dass Aerosole oder Tröpfchen in dem verdampften Wasser durchtreten, und
eine Vielzahl von austauschbaren Abfallbehältern (32), die so angeordnet sind, dass sie das wasserreduzierte Ausscheidungsmaterial aus der Verdampfungseinheit (24) aufnehmen (20),
ein Mittel zum Verdampfen von zusätzlichem Wasser aus dem Ausscheidungsmaterial in den Abfallbehältern (32) durch Erhitzen und/oder Druckminderung, um weiteres wasserreduziertes Ausscheidungsmaterial zu erzeugen,
wobei die Vorrichtung so angeordnet ist, dass sie das Ausscheidungsmaterial auf eine solche Weise der Reihe nach von der Verdampfungseinheit (24) in die Vielzahl von austauschbaren Abfallbehältern (32) überführt, dass, während ein oder mehrere Abfallbehälter (32) befüllt werden, Wasser durch Erhitzen und/oder Druckminderung aus dem Ausscheidungsmaterial, das in einem oder mehreren zuvor befüllten Abfallbehältern (32) vorhanden ist, verdampft wird.

10. Vorrichtung nach Anspruch 9, wobei die Verdampfungseinheit (24) so angeordnet ist, dass sie den Wassergehalt der wässrigen Zusammensetzung um 50-95% und vorzugsweise um 70-95% reduziert.

11. Vorrichtung nach Anspruch 9 oder 10, wobei die eine oder die mehreren Schutzstrukturen (59, 79) eine oder mehrere erhitzte Schutzstrukturen umfassen.

12. Vorrichtung nach Anspruch 9, wobei das Mittel zum Verdampfen von zusätzlichem Wasser aus dem Ausscheidungsmaterial so angeordnet ist, dass es den Wassergehalt des Ausscheidungsmaterials weiter um 10-100%, vorzugsweise um 30-100% und besonders bevorzugt um 50-100% reduziert.

13. Vorrichtung nach einem der Ansprüche 9 bis 12, wobei die wässrige Zusammensetzung Schwarzwasser aus einer oder mehreren Toiletten (12) und/oder einem oder mehreren Urinalen umfasst.

14. Vorrichtung nach Anspruch 13, wobei der wenigstens eine Puffertank (22) eine Vielzahl von Puffertanks umfasst, die jeweils so angeordnet sind, dass sie Schwarzwasser aus einer oder mehreren Toiletten (12) und/oder einem oder mehreren Urinalen aufnehmen.

15. Vorrichtung nach einem der Ansprüche 9 bis 14, ferner umfassend ein Fragmentierungsmittel (52), das so angeordnet ist, dass es Schwarzwasser fragmentiert, um eine fragmentierte Schwarzwasserjauche zu erzeugen, und wobei die wässrige Zusammensetzung die fragmentierte Schwarzwasserjauche umfasst.

## Revendications

1. Procédé de traitement de déchets corporels comportant des substances médicales, telles que des antibiotiques, présentes à l'état dissous dans les déchets corporels, ledit procédé comprenant :
dans au moins une cuve tampon (22), la réception d'une composition aqueuse contenant des substances médicales présentes à l'état dissous dans des déchets corporels ;
le stockage temporaire de la composition aqueuse dans la cuve tampon (22) ;
le transfert de la composition aqueuse par lots de la cuve tampon (22) à une unité de vaporisation (24) comprenant une ou plusieurs chambres de vaporisation (26, 28) ;
dans ladite ou lesdites chambres de vaporisation (26, 28), la vaporisation d'eau à partir de la composition aqueuse en vue de produire un matériau résiduel à teneur en eau réduite contenant lesdites substances médicales, la teneur en eau de la composition aqueuse étant réduite dans l'unité de vaporisation (24) de 30-95 % ;
le passage de l'eau vaporisée à travers une ou plusieurs structures de protection (59, 79), telles qu'un ou plusieurs débrumiseurs, agencées pour empêcher des aérosols ou des gouttelettes de passer à travers ;
le transfert du matériau résiduel de l'unité de vaporisation (24) à une pluralité de conteneurs à déchets (32) ;
la vaporisation d'eau supplémentaire à partir du matériau résiduel dans lesdits conteneurs à déchets (32) par chauffage et/ou réduction de pression, en vue de produire un matériau résiduel à teneur en eau encore réduite ;
le retrait et le remplacement dudit ou desdits conteneurs à déchets (32) contenant ledit matériau résiduel ; et
la soumission de conteneurs à déchets (32) retirés avec le matériau résiduel contenu à l'intérieur à un traitement destructif, tel qu'un processus d'incinération à haute température ;
dans lequel le matériau résiduel est transféré (20) depuis l'unité de vaporisation (24) à l'intérieur de ladite pluralité de conteneurs à déchets (32) en séquence de telle sorte que, pendant qu'un ou plusieurs conteneurs à déchets (32) sont remplis, de l'eau est vaporisée, par chauffage et/ou réduction de pression, à partir du matériau résiduel présent dans un ou plusieurs conteneurs à déchets (32) précédemment remplis.

2. Procédé selon la revendication 1, dans lequel la teneur en eau de la composition aqueuse est réduite dans l'unité de vaporisation (24) de 50-95 %, de préférence de 70-95 %.

3. Procédé selon la revendication 1 ou 2, comprenant en outre le chauffage de ladite ou desdites structures de protection (59, 79).

4. Procédé selon la revendication 1, dans lequel ladite vaporisation d'eau supplémentaire à partir du matériau résiduel dans les conteneurs à déchets (32) est effectuée avant le retrait des conteneurs à déchets (32).

5. Procédé selon l'une quelconque des revendications précédentes, dans lequel la teneur en eau du matériau résiduel contenu dans ladite pluralité de conteneurs à déchets (32) est encore réduite de 10-100 %, de préférence 30-100 %, et idéalement 50-100 %.

6. Procédé selon l'une quelconque des revendications précédentes, dans lequel la composition aqueuse comprend des eaux noires provenant d'une ou plusieurs toilettes (12) et/ou d'un ou plusieurs urinoirs.

7. Procédé selon l'une quelconque des revendications précédentes, dans lequel la composition aqueuse comprend une bouillie d'eaux noires fragmentée obtenue par fragmentation d'eaux noires.

8. Procédé selon la revendication 1, dans lequel ladite composition aqueuse est une bouillie fragmentée.

9. Appareil de traitement de déchets corporels comportant des substances médicales, telles que des antibiotiques, présentes à l'état dissous dans les déchets corporels, ledit appareil comprenant :
au moins une cuve tampon (22) qui est agencée pour recevoir et stocker temporairement une composition aqueuse contenant des substances médicales présentes à l'état dissous dans des déchets corporels ;
une unité de vaporisation (24) qui est agencée pour recevoir la composition aqueuse par lots depuis la cuve tampon (22), ladite unité de vaporisation (24) comprenant une ou plusieurs chambres de vaporisation (26, 28) agencées pour vaporiser de l'eau à partir de la composition aqueuse en vue de produire un matériau résiduel à teneur en eau réduite, l'unité de vaporisation (24) étant agencée pour réduire la teneur en eau de la composition aqueuse de 30-95 % ;
une ou plusieurs structures de protection (59, 79), telles qu'un ou plusieurs débrumiseurs, qui sont agencées pour empêcher des aérosols ou des gouttelettes dans l'eau vaporisée de passer à travers ; et
une pluralité de conteneurs à déchets remplaçables (32) qui sont agencés pour recevoir (20) le matériau résiduel à teneur en eau réduite depuis l'unité de vaporisation (24) ;
des moyens pour vaporiser, par chauffage et/ou réduction de pression, de l'eau supplémentaire à partir du matériau résiduel dans lesdits conteneurs à déchets (32), en vue de produire un matériau résiduel à teneur en eau encore réduite ;
l'appareil étant agencé pour transférer le matériau résiduel depuis l'unité de vaporisation (24) à l'intérieur de ladite pluralité de conteneurs à déchets remplaçables (32) en séquence de telle sorte que, pendant qu'un ou plusieurs conteneurs à déchets (32) sont remplis, de l'eau est vaporisée, par chauffage et/ou réduction de pression, à partir du matériau résiduel présent dans un ou plusieurs conteneurs à déchets (32) précédemment remplis.

10. Appareil selon la revendication 9, dans lequel l'unité de vaporisation (24) est agencée pour réduire la teneur en eau de la composition aqueuse de 50-95 %, et de préférence de 70-95 %.

11. Appareil selon la revendication 9 ou 10, dans lequel ladite ou lesdites structures de protection (59, 79) comprennent une ou plusieurs structures de protection chauffées.

12. Appareil selon la revendication 9, dans lequel lesdits moyens pour vaporiser de l'eau supplémentaire à partir du matériau résiduel sont agencés pour réduire encore la teneur en eau du matériau résiduel de 10-100 %, de préférence 30-100 %, et idéalement 50-100 %.

13. Appareil selon l'une quelconque des revendications 9 à 12, dans lequel la composition aqueuse comprend des eaux noires provenant d'une ou plusieurs toilettes (12) et/ou d'un ou plusieurs urinoirs.

14. Appareil selon la revendication 13, dans lequel ladite au moins une cuve tampon (22) comprend une pluralité de cuves tampons, chacune agencée pour recevoir des eaux noires provenant d'une ou plusieurs toilettes (12) et/ou d'un ou plusieurs urinoirs.

15. Appareil selon l'une quelconque des revendications 9 à 14, comprenant en outre des moyens de fragmentation (52) agencés pour fragmenter des eaux noires en vue de produire une bouillie d'eaux noires fragmentée, et dans lequel ladite composition aqueuse comprend ladite bouillie d'eaux noires fragmentée.
